(19) Europäisches Patentamt
European Patent Office
Office européen des brevets

(11) **EP 2 065 333 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
*B66F 3/24* *(2006.01)*      *B65G 1/07* *(2006.01)*
*A47F 1/06* *(2006.01)*

(21) Anmeldenummer: **08020050.4**

(22) Anmeldetag: **18.11.2008**

(54) **Verfahren zum Betreiben einer Warenpräsentationseinrichtung**

Method of operating a goods presentation device

Procédé destiné au fonctionnement d'un dispositif de présentation de marchandises

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.11.2007 DE 102007057481**

(43) Veröffentlichungstag der Anmeldung:
**03.06.2009 Patentblatt 2009/23**

(73) Patentinhaber: **FESTO AG & Co. KG**
**73734 Esslingen (DE)**

(72) Erfinder: **Schwarz, Stefan**
**72655 Altdorf (DE)**

(74) Vertreter: **Vogler, Bernd**
**Patentanwälte**
**Magenbauer & Kollegen**
**Plochinger Strasse 109**
**73730 Esslingen (DE)**

(56) Entgegenhaltungen:
**EP-A- 0 001 316**      **DE-A1-102004 048 428**
**DE-U1-202007 011 680**

## Beschreibung

Die Erfindung betrifft ein Verfahren zum Betreiben einer Warenpräsentationseinrichtung, die eine Hubvorrichtung mit einem Hubboden zum Abstellen von Waren in übereinander angeordneten Stapellagen und eine den Hubboden tragende Hubkissenanordnung mit einem oder mehreren übereinander angeordneten, gesondert für sich mit einem Druckfluid, insbesondere Druckluft, befüllbaren und durch Druckfluidzufuhr bis zu einer durch eine Hubbegrenzungseinrichtung begrenzten Gebrauchshöhe aufweitbaren Hubkissen, die im Falle von mehreren Hubkissen nacheinander zur Anwendung gebracht werden, aufweist, wobei jedem Hubkissen ein gesondertes, die Druckfluidzufuhr zum jeweiligen Hubkissen beherrschendes Steuerventil und ein gesonderter, den Fluiddruck in dem betreffenden Hubkissen messender Drucksensor zugeordnet sind und eine mit dem mindestens einen Drucksensor verbundene und die Steuerventile schaltende Steuereinheit vorhanden ist.

Die DE 20 2007 011 680 U1 beschreibt eine Warenpräsentationseinrichtung, die die oben genannten Merkmale aufweist. Mit ihr ist es möglich, den Hubboden nacheinander jeweils um die Gebrauchshöhe eines Hubkissens anzuheben, so dass sich die jeweils in der obersten Stapellage befindlichen Waren bequem wegnehmen lassen. Das Aufweiten der einzelnen Hubkissen wird jeweils durch eine Bedienungsperson initiiert.

Ferner geht aus der DE 10 2004 048 428 A1 ein Behälter mit einem Hubboden hervor, der mittels einer Hubkissenanordnung angehoben werden kann. Dabei besteht die Hubkissenanordnung aus einem einzigen Hubkissen, das mittels einer Pumpe mit zugeordneter Schaltereinrichtung mit Druckluft beaufschlagbar ist. Die Schaltereinrichtung kann wahlweise von Hand oder durch einen den Füllstand im Behälter erfassenden Sensor betätigt werden.

Des Weiteren beschreibt die EP 1 285 867 A2 einen Behälter, der einen Hubboden aufweist, der mittels einer Scherenarmanordnung mit zugeordnetem Antrieb angehoben werden kann. Zur Steuerung des Antriebs und somit zum Nachstellen des Hubbodens ist eine den Füllstand im Behälter erfassende Sensoreinrichtung beispielsweise in Gestalt einer Lichtschranke oder einer kapazitiven oder induktiven Sensoreinrichtung vorhanden. Auch das Gewicht der Warenfüllmenge könnte als Führungsgröße für die Nachstellung des Hubbodens ermittelt werden.

Ferner ist aus der DE 199 48 940 A1 ein Behälter mit einem Hubboden bekannt, der auf über seine Fläche verteilt angeordneten Federn ruht, die den Hubboden anheben, wenn der Hubboden entlastet wird.

Der vorliegenden Erfindung liegt, ausgehend von der Warenpräsentationseinrichtung nach der DE 20 2007 011 680 U1 die Aufgabe zugrunde, ein Verfahren der eingangs genannten Art zu schaffen, das nach einem anfänglichen Aktivieren selbsttätig abläuft, so dass die einzelnen Hubkissen nacheinander automatisch aufgeweitet und der Hubboden schrittweise ohne jeweilige Initierung durch eine Bedienungsperson angehoben wird, wenn die Stapelhöhe um einen bestimmten Betrag abgenommen hat.

Diese Aufgabe wird erfindungsgemäß dadurch gelöst, dass in einem automatischen Programmablauf nach dem Abstellen der Waren und Aktivieren der Hubvorrichtung dem einen oder einem der Hubkissen Druckfluid zugeführt wird, bis der Fluiddruck auf einen im Wesentlichen dem Gesamtgewicht der Waren entsprechenden Referenzdruckwert $p_{Ref}$ angestiegen ist und das Hubkissen bei im Wesentlichen konstant bleibendem Referenzdruckwert sich aufzuweiten beginnt, wonach die Druckfluidzufuhr unterbrochen wird, dass der Referenzdruckwert von der Steuereinheit für jedes Hubkissen in einen dem jeweiligen Drucksensor zugeordneten Schaltdruckwert $p_{Schalt}$ nach der Formel

$$p_{Schalt}(n) = \frac{N-n+1}{N+1} \bullet p_{Ref}$$

umgerechnet wird, in der N die Gesamtzahl der Hubkissen und n die in der Reihenfolge der Anwendung der Hubkissen die dem jeweiligen Hubkissen zukommende Zahl ist, dass, wenn der Fluiddruck in dem einen oder dem ersten von mehreren Hubkissen den dem Hubkissen zugeordneten Schaltdruckwert durch Wegnahme von Waren unterschreitet, die Druckfluidzufuhr zu dem Hubkissen freigegeben wird, so dass sich das Hubkissen bis zu seiner Gebrauchshöhe aufweitet, wonach die sich im Hubkissen einstellende Erhöhung des Fluiddrucks als Schaltsignal zum Unterbrechen der Druckfluidzufuhr zu dem einen oder dem ersten der mehreren Hubkissen verwendet wird, und dass im Falle mehrerer Hubkissen gleichzeitig oder zeitverzögert mit Bezug auf das Unterbrechen der Druckfluidzufuhr zu einem bis zu seiner Gebrauchshöhe aufgeweiteten Hubkissen die Druckfluidzufuhr zum jeweils nächsten Hubkissen freigegeben wird, wobei die Druckfluidzufuhr zum nächsten Hubkissen nach Erreichen mindestens von dessen Schaltdruckwert unterbrochen und später, wenn der Fluiddruck den Schaltdruckwert durch Wegnahme von Waren unterschreitet, zum Aufweiten des Hubkissens auf sein Gebrauchshöhe wieder freigegeben wird.

Wird das mindestens eine Hubkissen mit Druckfluid beaufschlagt, steigt der Fluiddruck in ihm zunächst verhältnismäßig schnell an, bis auf den Hubboden eine Kraft nach oben hin ausgeübt wird, die gleich groß wie das Gesamtgewicht der Waren ist. Der sich in der Druck/Zeit-Kurve einstellende konstante Druckwert ist daher ein dem Gesamtgewicht der Waren entsprechender Wert und wird als Referenzdruckwert zur Berechnung der Schaltdrücke verwendet, bei denen das Aufweiten der einzelnen Hubkissen auf ihre Gebrauchshöhe stattfinden soll.

Ist die erste Stapellage weggenommen, wiegt der verbleibende Warenstapel entsprechend weniger, so dass nach der Wegnahme der ersten Stapellage nicht das ursprüngliche Gesamtgewicht sondern nur ein entsprechend verringertes Gewicht hochgehoben werden muss. Daher erfolgt das Aufweiten des jeweiligen Hubkissens auf seine Gebrauchshöhe nicht bei dem anfänglich gemessenen Referenzdruckwert sondern bei einem sozusagen dem noch verbliebenen Warengewicht entsprechenden, nach der oben genannten Formel zu berechnenden Schaltdruck.

Bei dem erfindungsgemäßen Verfahrensablauf wird immer dann ein Druckkissen automatisch aufgeweitet, wenn eine Stapellage weggenommen worden ist. Die jeweils obersten Waren befinden sich daher praktisch immer in der gleichen Höhe.

Das erfindungsgemäße Verfahren weist einen einfachen und störungsunanfälligen Ablauf auf. Es erfordert ferner im Wesentlichen keine zusätzliche Hardware, so dass es sich auch auf kostengünstige Weise realisieren lässt.

Für den Fall, dass mit Undichtheiten gerechnet werden muss, ist zweckmäßigerweise vorgesehen, dass zum Ausgleich von Leckagen, die ein Absinken des Fluiddrucks in dem jeweiligen Hubkissen unter dessen Schaltdruckwert bewirken, die Druckfluidzufuhr in einem zyklusartigen Ablauf freigegeben wird, wenn der Fluiddruck einen unteren Grenzdruckwert unterhalb des Schaltdruckwertes erreicht, und unterbrochen wird, wenn der Fluiddruck bis zu einem oberen Grenzdruckwert im Bereich des Schaltdruckwertes angestiegen ist.

Eine weitere zweckmäßige Maßnahme besteht darin, dass man nach dem Aufweiten eines Hubkissens auf seine Gebrauchshöhe den Fluiddruck in dem oder den zuvor aufgeweiteten Hubkissen auf den Fluiddruck im zuletzt aufgeweiteten Hubkissen absenkt oder durch Leckagen absinken lässt. Das Aufrechthalten eines größeren Druckes in dem oder den zuvor aufgeweiteten Hubkissen ist unnötig. Daher lässt sich auf die genannte Weise eine nicht unerhebliche Kostenersparnis erzielen.

Des Weiteren ist es vorteilhaft, dass die Hubkissen in der Reihenfolge von oben nach unten zur Anwendung kommen, so dass das dem Hubboden benachbarte oberste Hubkissen als erstes Hubkissen, das diesem nach unten hin folgende Hubkissen als zweites Hubkissen und so weiter zur Anwendung kommt.

Nachstehend wird ein Ausführungsbeispiel der Erfindung anhand der Zeichnung erläutert. Es zeigen:

Figur 1    eine mit dem erfindungsgemäßen Verfahren betreibbare Warenpräsentationseinrichtung in schematischer Schrägansicht,

Figur 2    die Warenpräsentationseinrichtung nach Figur 1 im schematischen Vertikalschnitt gemäß der Schnittlinie II-II in Figur 1,

Figur 3    ein eine Hubvorrichtung enthaltendes Basisteil der Warenpräsentationseinrichtung nach den Figuren 1 und 2 in Schrägansicht,

Figur 4    das Basisteil nach Figur 3 ohne Hubvorrichtung und Einschubmodul in vergrößerter Schrägansicht,

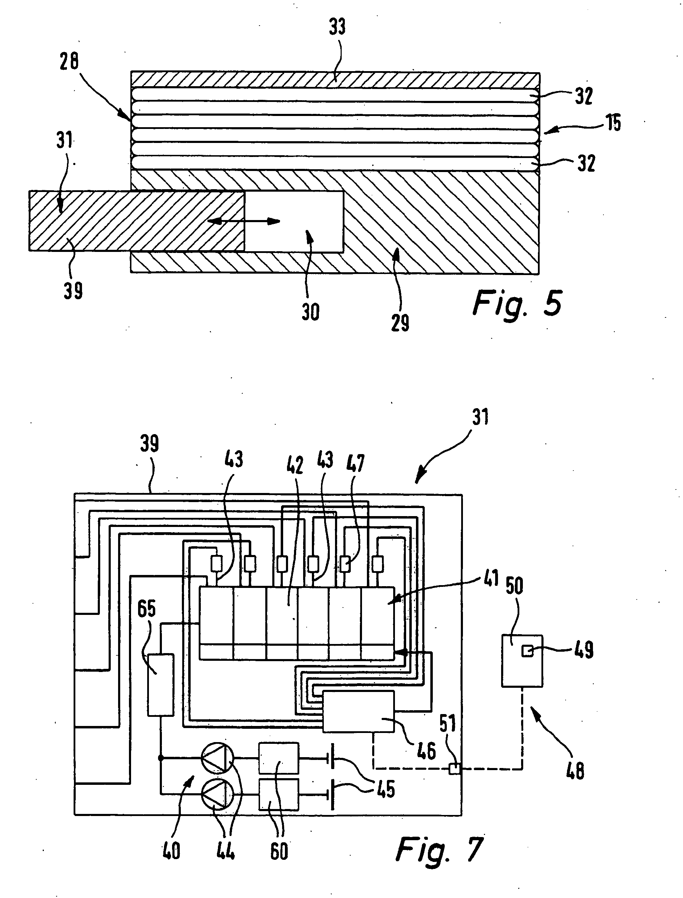

Figur 5    das Basisteil nach Figur 3 im Vertikalschnitt gemäß der Schnittlinie V-V in Figur 3 in stark schematisierter Darstellungsweise,

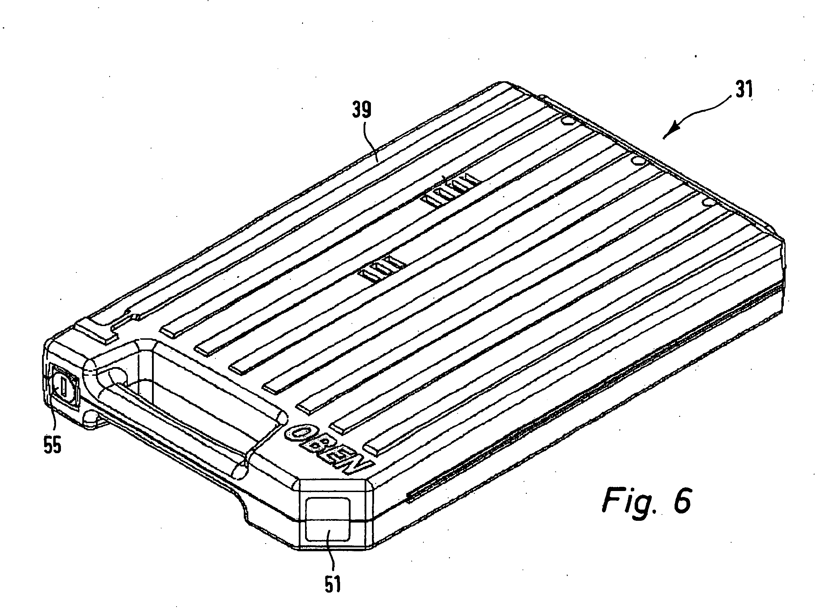

Figur 6    das in das Basisteil einzuschiebende Einschubmodul in schematischer Schrägansicht und

Figur 7    eine stark schematisierte Darstellung des inneren Aufbaus des Einschubmoduls nach Figur 7.

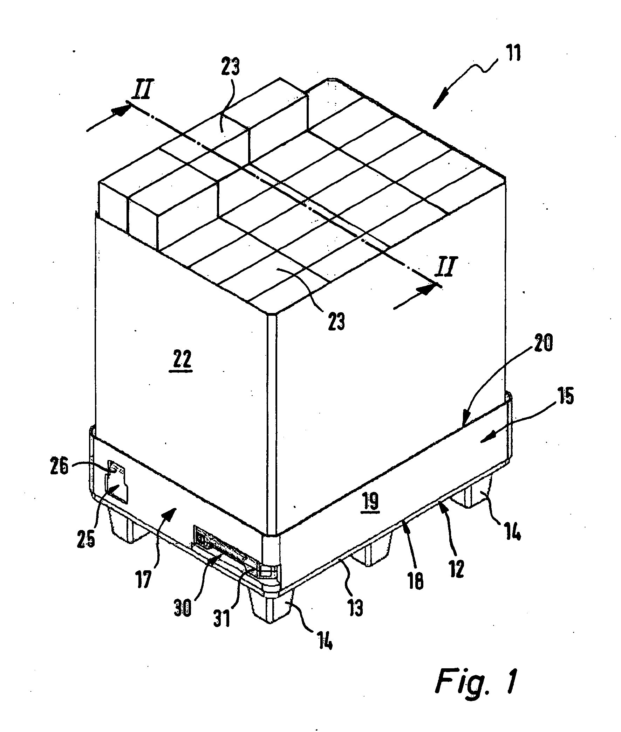

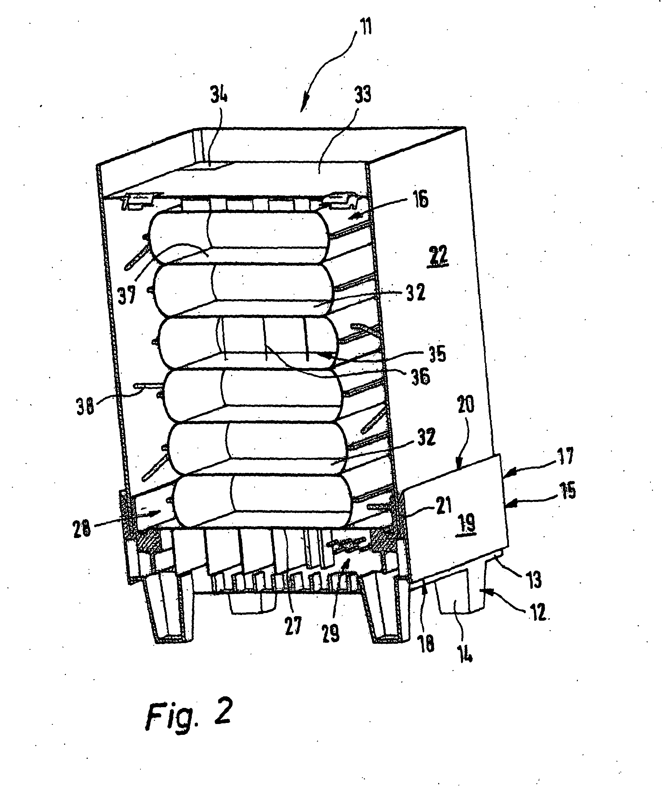

Aus den Figuren 1 und 2 geht eine Warenpräsentationseinrichtung 11 hervor, die modular aufgebaut ist und eine Tragpalette 12 mit einer Grundplatte 13 und von dieser nach unten hin abstehenden Füßen 14 sowie ein auf die Grundplatte 13 aufgesetztes Basisteil 15 aufweist, in dem eine Hubvorrichtung 16 angeordnet ist.

Als Tragpalette 12 ist eine handelsübliche Standard-Tragpalette vorgesehen, die aufgrund ihrer Füße 14 von der Hubgabel eines Gabelstaplers untergriffen werden kann.

Das Basisteil 15 ist insbesondere lose auf die Tragpalette 12 aufgesetzt und kann daher jederzeit wieder abgenommen werden. Als Material für das Basisteil eignet sich beispielsweise Kunststoff. Aus der Zeichnung geht ferner hervor, dass das Basisteil 15 eine rechteckige Grundform hat.

Das Basisteil 15 weist einen Rahmen 17 auf, der mit Bezug auf die Flächenerstreckung der Grundplatte 13 der Tragpalette 12 etwas größer ist, so dass die Unterkante 18 des Rahmens 17 beim Aufsetzen die Rahmenoberkante 20 der Grundplatte 13 überlappt, so dass sich eine Seitenfixierung des Basisteils 15 auf der Tragplatte 12 ergibt.

Der Rahmen 17 weist eine Rahmenwand 19 auf, in der sich eine von ihrer Rahmenoberkante 20 aus offene schlitzartige Aufnahmeöffnung 21 nach unten erstreckt, die zum Einstecken von Seitenwänden 22 dient. Die Seitenwände 22 bestehen zweckmäßigerweise aus kartonartigem Material, so dass sie ohne Schwierigkeiten entsorgt werden können, wenn die in der Präsentationseinrichtung 11 befindlichen Waren 23 vollständig weggenommen worden sind.

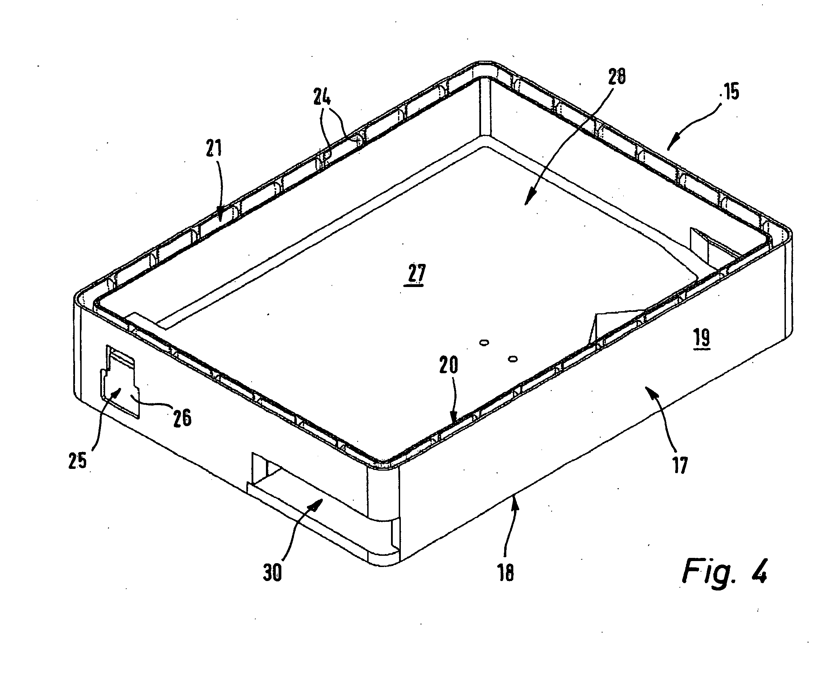

Wie insbesondere aus Figur 4 hervorgeht, sind an den Innenseiten der vorderen und hinteren Wand, die die Aufnahmeöffnung 21 begrenzen, jeweils nach innen ragende stegartige Vorsprünge 24 angeordnet. Dabei liegen die stegartigen Vorsprünge an der vorderen Wand den stegartigen Vorsprünge an der hinteren Wand gegenüber. Die Seitenwände 22 werden dann in den Bereich zwischen den einander gegenüberliegenden Vorsprüngen 24 eingesteckt.

Ferner ist noch eine Rasteinrichtung 25 zum Verrasten der Seitenwände 22 in der Aufnahmeöffnung 21 vorgesehen. Die Rasteinrichtung 25 befindet sich ebenfalls am Basisteil 15 und kann von dessen Außenseite her bedient werden, beispielsweise mittels eines im Rahmen 17 des Basisteils 15 gelagerten Betätigungsgriffes 26. Durch dessen Betätigung werden die Seitenwände 22 in der Aufnahmeöffnung 21 verrastet.

Das Basisteil 15 weist ferner einen Zwischenboden 27 auf, der das Basisteil 15 in einen oberen Bereich 28 und in einen unteren Bereich 29 aufteilt, wobei sich im oberen Bereich 28 die Hubvorrichtung 16 und im unteren Bereich 29 ein Aufnahmeschacht 30 zur Aufnahme eines noch zu beschreibenden Einschubmoduls 31 befindet.

Die bereits erwähnte Hubvorrichtung 16 weist einen Hubboden 33 auf, der zum Abstellen der zu präsentierenden Waren 23 in übereinander angeordneten Stapellagen dient. In Figur 1 sind die Waren 23 schematisch quaderförmig gezeichnet. Von der als oberste gezeichneten Lage sind noch vier einzelne Waren 23 vorhanden. Die nach unten hin nachfolgende Stapellage ist noch vollständig.

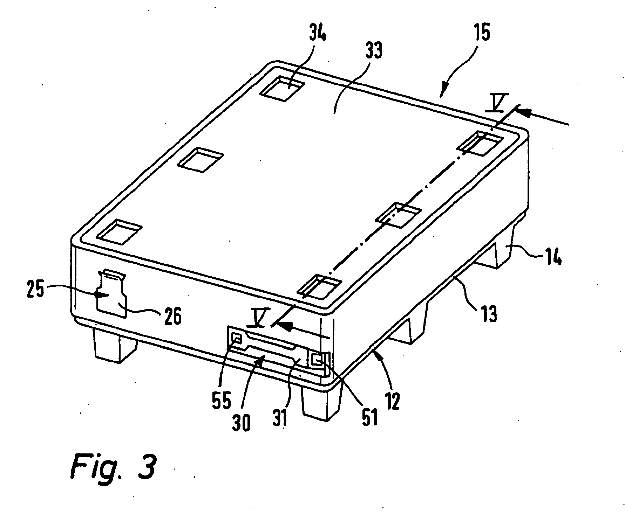

Die Hubvorrichtung 16 weist ferner eine den Hubboden 33 tragende Hubkissenanordnung auf, die von mehreren übereinander angeordneten und jeweils gesondert für sich mit einem Druckfluid, insbesondere Druckluft, befüllbaren Hubkissen 32 gebildet wird. Die Hubkissen 32 sind in ihrer Nichtgebrauchslage entlüftet, so dass sie jeweils eine flach zusammengelegte Gestalt aufweisen und übereinander liegend auf dem Zwischenboden 27 lagern. Dabei kann der Hubboden 33 im Wesentlichen mit der Oberkante 20 des Rahmens 17 abschließen (Figur 3). Auf diese Weise entsteht ein kompaktes, gut handhabbares Basisteil 15.

An der Oberseite des Hubbodens 33 befinden sich in etwa quadratisch ausgebildete Vertiefungen 34, in die Füße einer weiteren Tragpalette 12 gestellt werden können, so dass sich jeweils von einer Tragpalette 12 und einem Basisteil 15 gebildete Einheiten aufeinander stapeln lassen.

Figur 2 zeigt alle Hubkissen 32 in ihrer mittels Druckfluid in Höhenrichtung aufgeweiteten Gebrauchslage. Vorstehend wurde bereits erwähnt, dass die Hubkissen 32 unabhängig voneinander mit Druckfluid befüllbar sind, so dass in Abhängigkeit von der Warenstandshöhe ein Hubkissen 32 nach dem anderen aufgeblasen wird, so dass sich der Hubboden 33 jeweils entsprechend anhebt.

Den somit nacheinander zur Anwendung kommenden Hubkissen 32 ist jeweils eine Hubbegrenzungseinrichtung 35 zugeordnet, die den Aufweithub und somit die Gebrauchshöhe des jeweiligen Hubkissens 32 begrenzt. Beim zweckmäßigen Ausführungsbeispiel entspricht die aufgeweitete Gebrauchshöhe jedes Hubkissens 32 der in Höhenrichtung gemessenen Abmessung einer Waren-Stapellage, so dass der Hubboden 33 beim Aufblasen eines Hubkissens 32 um die Höhe einer Stapellage nach oben fährt.

Die Hubbegrenzungseinrichtung 35 kann im Inneren des jeweiligen Hubkissens 32 angeordnet sein und die Unterseite und die Oberseite des betreffenden Hubkissens 32 miteinander verbinden. Sie wird beispielsweise von in Figur 2 der Übersichtlichkeit wegen nur bei einem der Hubkissen 32 symbolisch angedeuteten, einerseits mit der Kissenunterseite und andererseits mit der Kissenoberseite verbundenen Abstandsfäden gebildet. Auf diese Weise wird die Hubkissenaufweitung so begrenzt, dass in der Gebrauchslage die Oberseite und die Unterseite des jeweiligen Hubkissens 32 parallel zueinander ausgerichtete Auflageflächen 37 bilden. Auf diese Weise kann der Hubboden 33 beim Aufblasen der Hubkissen 32 nicht in eine Schräglage gelangen, die ein Verrutschen der darauf gelagerten Waren zur Folge haben könnte.

Zur unabhängigen Befüllung der Hubkissen 32 ist jedem Hubkissen 32 ein gesonderter Druckfluidschlauch 38 zugeordnet, der einerseits über einen Druckfluidanschluss in das jeweilige Hubkissen 32 einmündet und andererseits in nicht dargestellter Weise mit einem Druckfluidausgang 52 am Einschubmodul 31 verbunden ist.

Das oberhalb der Füße 14 der Tragpalette 12 in den Aufnahmeschacht 30 am Basisteil 15 einschiebbare und bei Bedarf austauschbare Einschubmodul 31 weist ein Modulgehäuse 39 auf und enthält Komponenten einer Ansteuereinrichtung 40 zum Ansteuern der Hubvorrichtung 16. Dabei weist die Ansteuereinrichtung 40 eine Ventileinrichtung 41 mit in der Anzahl den Hubkissen 32 entsprechenden Steuerventilen 42 auf, die jeweils einem Hubkissen 32 zugeordnet sind und die Druckfluidzufuhr zum jeweiligen Hubkissen 32 beherrschen. An den Ausgängen der Steuerventile 42 befindet sich jeweils ein Arbeitsanschluss 43, der über eine Fluidleitung beispielsweise in Gestalt eines Schlauches mit dem betreffenden Druckfluidausgang 52 am Modulgehäuse 39 verbunden ist.

Die Steuerventile 42 können beispielsweise als Piezo-Ventile ausgebildet sein.

Die das Druckfluid bildende Druckluft, die zur Ventileinrichtung 41 gelangt, wird von einem mindestens einen Kompressor 44 enthaltenden Drucklufterzeuger hergestellt, der am Einschubmodul 31 angeordnet sein kann. Der mindestens eine Kompressor 44 kann elektrisch, insbesondere mittels eines jeweiligen Elektromotors 60, angetrieben werden. Die Kompressoren 44 sind nicht unmittelbar sondern über einen Druckspeicher 65 mit der Ventileinrichtung 41 verbunden, so dass die Ventileinrichtung 41 vom Druckspeicher 65 her gespeist wird. Ferner ist eine Stromversorgungseinrichtung vorgesehen, die mindestens einen zweckmäßigerweise ebenfalls am Einschubmodul 31 angeordneten, netzunabhängigen Stromversorger in Gestalt eines Akkumulators 45 enthält. Befindet sich der mindestens eine Akkumulator 45 am Einschubmodul 31, ist der Einschubmodul 31 energietechnisch autark. Er kann jedoch auch zusätzlich noch einen Netzanschluss zum Anschluss an das Stromnetz aufweisen.

Des Weiteren ist eine zweckmäßigerweise ebenfalls am Einschubmodul 31 angeordnete Steuereinheit 46 zur Ansteuerung der Ventileinrichtung 41 vorhanden. Von der Steuereinheit 46 werden Steuerbefehle zu den Steuerventilen 42 der Ventileinrichtung 41 übermittelt, so das ein Schaltvorgang des angesteuerten bzw. der angesteuerten Steuerventile 42 stattfindet.

Die Steuereinheit 46 ist ferner noch mit Drucksensoren 47 gekoppelt, die jeweils einem der Hubkissen 32 zugeordnet sind und den Fluiddruck im betreffenden Hubkissen 32 messen. Die Drucksensoren 47 können im Bereich der Arbeitsanschlüsse 43 oder unmittelbar an den Arbeitsanschlüssen 43 der Steuerventile 42 angeordnet sein.

Die Ansteuereinrichtung 40 mit der Steuereinheit 46, den Steuerventilen 42 und zweckmäßigerweise auch der Druckluftversorgung sind, wie bereits ausgeführt, an dem Einschubmodul 31 angeordnet, das in den Aufnahmeschacht 30 einschiebbar und im Bedarfsfalle austauschbar ist. In diesem Zusammenhang ist des Weiteren vorgesehen, dass sich an der Rückseite des Einschubmoduls 31 nicht dargestellte Zentrierbohrungen befinden, in die im Aufnahmeschacht 30 angeordnete Zentrierstifte einfahren können, so dass eine Zentrierung des Einschubmoduls 31 im Aufnahmeschacht 30 erfolgt. Das Einschubmodul 31 kann mittels eines schlossartigen Verriegelungselements 55 im Aufnahmeschacht 30 verriegelt werden. An der Rückseite des Einschubmoduls 31 kann noch ein ebenfalls nicht dargestellter Kontakschalter vorgesehen sein, der das korrekte Einstecken des Einschubmoduls 31 detektiert.

Des Weiteren ist eine Aktivierungseinrichtung 48 zur Aktivierung der Hubvorrichtung 16 vorhanden, die mit der Steuereinheit 46 gekoppelt ist. Zur Aktivierungseinrichtung 48 gehört ein Aktivierungsschalter 49, der an einem externen Aktivierungsmodul 50 sitzt. Die Signalübertragung zur Steuereinheit 46 erfolgt drahtlos, insbesondere per Funk. Die Aktivierung erfolgt also über eine Fernbedienung. Zweckmäßigerweise lassen sich mit dem Aktivierungsmodul 50 die Hubvorrichtungen 16 mehrerer Warenpräsentationseinrichtungen 11 aktivieren. Der Aktivierungseinrichtung 48 ist noch ein Ein-/Aus-Schalter 51 zugeordnet, der zweckmäßigerweise am Einschubmodul 31 angeordnet ist. Der Ein-/Aus-Schalter 51 ist durch Betätigung mit der Hand oder dem Fuß zwischen einer die Aktivierung mittels des Aktivierungsschalters 49 ermöglichenden Ein-Stellung und einer die Aktivierung blockierenden Aus-Stellung umschaltbar. Die Warenpräsentationseinrichtung 11 muss also zunächst durch den Ein-/Aus-Schalter 51 freigeschaltet bzw. "scharf gemacht" werden, bevor eine Aktivierung der Hubvorrichtung 16 möglich ist.

Die Aktivierungseinrichtung muss nicht unbedingt wie beim Ausführungsbeispiel separat von der Hubvorrichtung angeordnet sein. Sie könnte sich auch am Einschubmodul 31 befinden, beispielsweise indem man anstelle des Ein-/Aus-Schalters 51 einen Aktivierungsschalter vorsieht.

Die Warenpräsentationseinrichtung 11 ist insbesondere für Verkaufsstätten gedacht, die ihre Waren in großen Stückzahlen beziehen und den Kunden ohne Umladen in Regale oder dergleichen anbieten. Dabei wird die Warenpräsentationseinrichtung 11 in der Regel im bereits vollständig mit Waren 23 bestückten Zustand angeliefert. Die Waren 23 sind in übereinander angeordneten Stapellagen angeordnet und werden seitlich durch die Seitenwände 22 fixiert. Die Hubkissen 32 befinden sich zunächst noch in ihrer entlüfteten Ausgangslage, in der sie mit jeweils aufeinander liegender Kissenoberseite und Kissenunterseite übereinander angeordnet sind. Haben die Käufer jeweils eine Stapellage der Waren 23 weggenommen, müssten sie anschließend entsprechend tiefer in die von den Seitenwänden 22 umschlossene Behälteröffnung greifen, um an Waren 23 zu kommen. Diese Unbequemlichkeit wird durch die Hubvorrichtung 16 vermieden, indem die Hubkissen 32 nacheinander zur Anwendung gebracht werden, so dass die noch auf dem Hubboden 33 befindlichen Waren jeweils entsprechend weit angehoben werden.

Es wird in diesem Zusammenhang noch ausdrücklich darauf hingewiesen, dass die Hubkissen 32 nicht unbedingt jeweils nur einer einzigen Stapellage der Waren zugeordnet sein müssen. Handelt es sich um Waren geringer Höhe, kann es genügen, wenn man erst nach dem Wegnehmen mehrerer Stapellagen eines der Hubkissen 32 aufweitet, dessen Gebrauchshöhe der Summe der Höhen der weggenommenen Stapellagen entspricht.

Ist die letzte Stapellage an Waren 23 weggenommen, werden alle Hubkissen 32 wieder entlüftet, so dass der Hubboden 33 in seine in Figur 3 gezeigte Ausgangsstellung fährt, in der er zweckmäßigerweise im Wesentlichen mit der Rahmenoberkante 20 des Rahmens 17 abschließt. Die Seitenwände 22 können dann durch Entriegeln der Rasteinrichtung 25 aus der Aufnahmeöffnung 21 herausgezogen und entsorgt werden.

Wesentlich ist vorliegend, dass die einzelnen Hubkissen 32 von der Bedienungsperson nicht einzeln für sich aktiviert werden müssen, sondern dass nach dem Abstellen der Waren auf dem Hubboden 33 durch einen einmaligen Aktivierungsvorgang ein automatischer Programmablauf initiiert wird, bei dem die Hubkissen 32 automatisch nacheinander aufgeblasen werden, wenn jeweils eine gewisse Anzahl von Waren, insbesondere eine Stapellage, weggenommen worden ist. Dies wird durch eine entsprechende Programmierung der Steuereinheit 46 erreicht.

Dieses Verfahren wird nachfolgend beschrieben. Dabei wird der Einfachheit halber davon ausgegangen, dass nach der Wegnahme jeder Stapellage von Waren 23 eines der Hubkissen 32 aufgeweitet wird. Dies könnte auch anders sein, da das Aufblasen der einzelnen Hubkissen 32 in Abhängigkeit von dem noch auf dem Hubboden 33 lastenden Gewicht der verbliebenen Waren erfolgt.

Zu Beginn sind alle Hubkissen 32 entlüftet. Nach dem Aktivieren der Hubvorrichtung 16 schaltet die Steuereinheit 46 das dem als erstes aufzuweitenden Hubkissen 32 zugeordnete Steuerventil 42 in seine Offenstellung, so dass dem betreffenden Hubkissen 32 über den jeweiligen Druckfluidschlauch 38 Druckfluid zugeführt wird. Diese Druckfluidzufuhr erfolgt so lange, bis der im Hubkissen 32 herrschende Fluiddruck auf einen im Wesentlichen dem Gesamtgewicht aller Waren entsprechenden Referenzdruckwert $p_{Ref}$ angestiegen ist. Dieser Referenzdruckwert ist dann erreicht, wenn ein Kräftegleichgewicht zwischen dem von oben her lastenden Warengewicht und der vom Fluiddruck im Hubkissen erzeugten, nach oben gerichteten Kraft vorhanden ist. Das Kräftegleichgewicht äußert sich dadurch, dass sich das Hubkissen 32 aufzuweiten und der Hubboden 33 dementsprechend anzuheben beginnt, so dass der Fluiddruck im Wesentlichen konstant bleibt. Dieser Referenzdruckwert wird von der Steuereinheit 46 erfasst, die das betreffende Steuerventil 42 schließt, so dass dem ersten Hubkissen 32 kein Druckfluid mehr zugeführt wird.

Die Steuereinheit 46 errechnet aus dem Referenzdruckwert die vorliegend Schaltdruckwerte genannten Fluiddruckwerte, bei denen die Hubkissen 32 nacheinander aufgeblasen werden sollen. Dabei soll das Aufweiten des ersten Hubkissens 32 bei einem Schaltdruckwert erfolgen, der dem Gesamtwarengewicht abzüglich des Gewichts der obersten Stapellage entspricht. Anschließend soll sich das als nächstes kommende zweite Hubkissen 32 bei einem Schaltdruckwert aufweiten, der dem Gesamtwarengewicht abzüglich des Gewichts der beiden oberen Stapellagen entspricht und so weiter.

Der Schaltdruckwert $p_{Schalt}$ der einzelnen Hubkissen 32 errechnet sich nach der Formel

$$p_{Schalt}(n) = \frac{N-n+1}{N+1} \bullet p_{Ref}$$

in der N die Gesamtzahl der Hubkissen und n die in der Reihenfolge der Anwendung der Hubkissen die dem jeweiligen Hubkissen 32 zukommende Zahl ist.

Beim Ausführungsbeispiel sind sechs Hubkissen 32 vorhanden, so dass der Hubboden 33 sechs mal um jeweils die durch die Hubbegrenzungseinrichtung 35 bestimmte Hubkissen-Gebrauchshöhe angehoben werden kann. Dies entspricht einer Beladung des Hubbodens 33 mit sieben Stapellagen von Waren (die oberste Stapellage wird weggenommen, wenn noch kein Hubkissen aufgeweitet ist).

Aus der genannten Formel ergibt sich, dass der Schaltdruckwert des ersten Hubkissens 6/7, der des zweiten Hubkissens 5/7, der des dritten Hubkissens 4/7, der des vierten Hubkissens 3/7, der des fünften Hubkissens 2/7 und der des sechsten Hubkissens 1/7 des Referenzdruckwertes ist.

Diese Schaltdruckwerte werden den einzelnen, jeweils zu einem Hubkissen 32 gehörenden Drucksensoren 47 zugeordnet.

In dem bis jetzt beschriebenen Verfahrensstadium ist das erste Hubkissen 32 mit dem für die Berechnung der Schaltdruckwerte benötigten Referenzdruckwert beaufschlagt, ohne dass das Hubkissen nennenswert aufgeweitet ist. Dieser Referenzdruckwert ist größer als der Schaltdruckwert des ersten Hubkissens 32. Wird nun Ware weggenommen, erniedrigt sich die von oben her einwirkende Gewichtskraft. Das erste Hubkissen 32 gibt dementsprechend nach, so dass sich der Fluiddruck im ersten Hubkissen 32 verringert. Nach Wegnahme der obersten Waren-Stapellage erreicht der Fluiddruck den Schaltdruckwert des ersten Hubkissens 32 und unterschreitet diesen bei Wegnahme der maßgebenden Einzelware. Die Steuereinheit 46 erkennt dies durch einen Vergleich des von dem zugehörigen Drucksensor 47 gemeldeten Istwerts des Fluiddrucks mit dem Schaltdruckwert und schaltet das zugehörige Steuerventil 42, so dass die Druckfluidzufuhr zum ersten Hubkissen 32 freigegeben wird. Das erste Hubkissen 32 weitet sich dann unter Hochheben des Hubbodens 33 bis zu seiner Gebrauchshöhe auf. Die Hubbegrenzungseinrichtung 35 hindert das Hubkissen an einem weiteren Aufweiten, so dass sich der Fluiddruck im ersten Hubkissen 32 erhöht. Diese Druckerhöhung wird vom betreffenden Drucksensor 47 registriert und von der Steuereinheit 46 in ein das betreffende Steuerventil 42 schaltendes Schaltsignal umgesetzt, so dass die Druckfluidzufuhr wieder unterbrochen wird. Nunmehr befindet sich die nächste Waren-Stapellage in der für die Käufer günstigen Zugriffshöhe.

Gleichzeitig oder zeitverzögert zu diesem Unterbrechen der Druckfluidzufuhr zum ersten Hubkissen 32 schaltet die entsprechend programmierte Steuereinheit 46 das dem als zweites aufzuweitenden Hubkissen 32 zugeordnete Steuerventil 42, so dass die Druckfluidzufuhr zum zweiten Hubkissen 32 freigegeben wird. Hat der Fluiddruck im zweiten Hubkissen 32 dessen Schaltdruckwert erreicht, wird die Druckfluidzufuhr zum Hubkissen 32 unterbrochen. Das zweite Hubkissen 32 befindet sich dann wie zu einem früheren Zeitpunkt das erste Hubkissen 32 sozusagen in einem Bereitschaftszustand für sein späteres Aufweiten.

Der Schaltdruckwert des zweiten Hubkissens 32 ist kleiner als der Schaltdruckwert des ersten Hubkissens 32. Das zweite Hubkissen 32 bleibt daher so lange in diesem Bereitschaftszustand, bis der Fluiddruck in ihm durch Wegnahme von Waren den Schaltdruckwert des zweiten Hubkissens 32 unterschreitet. Zu diesem Zeitpunkt wird das dem zweiten Hubkissen 32 zugeordnete Steuerventil 42 wieder auf Druckfluidzufuhr geschaltet, so dass das zweite Hubkissen 32 aufgeweitet wird, bis die Druckfluidzufuhr, hat das zweite Hubkissen 32 seine Gebrauchshöhe erreicht, wieder unterbrochen und gleichzeitig oder zeitverzögert das dritte Hubkissen 32 bis zum Erreichen seines Schaltdruckwertes mit dem Druckfluid beaufschlagt wird.

Dieser Ablauf setzt sich dann in entsprechender Weise bis zum letzten Hubkissen 32 fort.

Ist die Hubvorrichtung nur mit zwei Waren-Stapellagen beladen, genügt ein einziges Hubkissen. Der geschilderte Verfahrensablauf endet dann entsprechend früher.

Sind sämtliche Waren von der Hubvorrichtung weggenommen, können alle Hubkissen 32 wieder entlüftet werden.

Zum Ausgleich von Leckagen, die ein Absinken des Fluiddrucks in dem jeweiligen Hubkissen 32 unter dessen Schaltdruckwert bewirken können, kann vorgesehen sein, dass die Druckfluidzufuhr in einem zyklusartigen Ablauf freigegeben wird, wenn der Fluiddruck einen unteren Grenzdruckwert unterhalb des Schaltdruckwerts erreicht, und unterbrochen wird, wenn der Fluiddruck bis zu einem oberen Grenzdruckwert im Bereich des Schaltdruckwertes angestiegen ist.

Der zum Aufweiten des jeweils zuletzt aufgeweiteten Hubkissens 32 erforderliche, seinem Schaltdruckwert entsprechende Fluiddruck ist niedriger als der Fluiddruck in dem oder den zuvor aufgeweiteten Hubkissen 32. Daher ist es zweckmäßig, dass man nach dem Aufweiten eines Hubkissens 32 auf seine Gebrauchshöhe den Fluiddruck in dem oder den zuvor aufgeweiteten Hubkissen auf den Fluiddruckwert im zuletzt aufgeweiteten Hubkissen 32 absenkt oder durch Leckagen absinken lässt.

Prinzipiell kann man die vorhandenen Hubkissen 32 in beliebiger Reihenfolge nacheinander aufblasen. Zweckmäßigerweise ist jedoch vorgesehen, dass die Hubkissen 32 in der Reihenfolge von oben nach unten zur Anwendung kommen, so dass das dem Hubboden 33 benachbarte oberste Hubkissen 32 als erstes Hubkissen, das diesem nach unten hin folgende Hubkissen 32 als zweites Hubkissen usw. zur Anwendung kommt.

**Patentansprüche**

1. Verfahren zum Betreiben einer Warenpräsentationseinrichtung (11), die eine Hubvorrichtung (16) mit einem Hubboden (33) zum Abstellen von Waren in übereinander angeordneten Stapellagen und eine den Hubboden (33) tragende Hubkissenanordnung mit einem oder mehreren übereinander angeordneten, gesondert für sich mit einem Druckfluid, insbesondere Druckluft, befüllbaren und durch Druckfluidzufuhr bis zu einer durch eine Hubbegrenzungseinrichtung (35) begrenzten Gebrauchshöhe aufweitbaren Hubkissen (32), die im Falle von mehreren Hubkissen (32) nacheinander zur Anwendung gebracht werden, aufweist, wobei jedem Hubkissen (32) ein gesondertes, die Druckfluidzufuhr zum jeweiligen Hubkissen (32) beherrschendes Steuerventil (42) und ein gesonderter, den Fluiddruck in dem betreffenden Hubkissen (32) messender Drucksensor (47) zugeordnet sind und eine mit dem mindestens einen Drucksensor (47) verbundene und die Steuerventile (42) schaltende Steuereinheit (46) vorhanden ist, **dadurch gekennzeichnet, dass** in einem automatischen Programmablauf nach dem Abstellen der Waren (23) und Aktivieren der Hubvorrichtung (16) dem einen oder einem der Hubkissen (32) Druckfluid zugeführt wird bis der Fluiddruck auf einen im Wesentlichen dem Gesamtgewicht der Waren (23) entsprechenden Referenzdruckwert $p_{Ref}$ angestiegen ist und das Hubkissen (32) bei im Wesentlichen konstant bleibendem Referenzdruckwert sich aufzuweiten beginnt, wonach die Druckfluidzufuhr unterbrochen wird, dass der Referenzdruckwert von der Steuereinheit (46) für jedes Hubkissen (32) in einen dem jeweiligen Drucksensor (47) zugeordneten Schaltdruckwert $p_{schalt}$ nach der Formel

$$p_{Schalt}(n) = \frac{N - n + 1}{N + 1} \bullet p_{Ref}$$

umgerechnet wird, in der N die Gesamtzahl der Hubkissen (32) und n die in der Reihenfolge der Anwendungen der Hubkissen (32) die dem jeweiligen Hubkissen (32) zukommende Zahl ist, dass, wenn der Fluiddruck in dem einen oder dem ersten von mehreren Hubkissen (32) den dem Hubkissen (32) zugeordneten Schaltdruckwert durch Wegnahme von Waren (23) unterschreitet, die Druckfluidzufuhr zu dem Hubkissen (32) freigegeben wird, so dass sich das Hubkissen (32) bis zu seiner Gebrauchshöhe aufweitet, wonach die sich im Hubkissen (32) einstellende Erhöhung des Fluiddrucks als Schaltsignal zum Unterbrechen der Druckfluidzufuhr zu dem einen oder dem ersten der mehreren Hubkissen (32) verwendet wird, und dass im Falle mehrerer Hubkissen (32) gleichzeitig oder zeitverzögert mit Bezug auf das Unterbrechen der Druckfluidzufuhr zu einem bis zu seiner Gebrauchshöhe aufgeweiteten Hubkissen (32) die Druckfluidzufuhr zum jeweils nächsten Hubkissen (32) freigegeben wird, wobei die Druckfluidzufuhr zum nächsten Hubkissen (32) nach Erreichen mindestens von dessen Schaltdruckwert unterbrochen und später, wenn der Fluiddruck den Schaltdruckwert durch Wegnahme von Waren (23) unterschreitet, zum Aufweiten des Hubkissens (32) auf seine Gebrauchshöhe wieder freigegeben wird.

2. Verfahren nach Anspruch 1, **dadurch gekennzeichnet, dass** zum Ausgleich von Leckagen, die ein Absinken des Fluiddrucks in dem jeweiligen Hubkissen (32) unter dessen Schaltdruckwert bewirken, die Druckfluidzufuhr in einem zyklusartigen Ablauf freigegeben wird, wenn der Fluiddruck einen unteren Grenzdruckwert unterhalb des Schaltdruckwertes erreicht, und unterbrochen wird, wenn der Fluiddruck bis zu einem oberen Grenzdruckwert im Bereich des Schaltdruckwertes angestiegen ist.

3. Verfahren nach Anspruch 1 oder 2, **dadurch gekennzeichnet, dass** man nach dem Aufweiten eines Hubkissens (32) auf seine Gebrauchshöhe den Fluiddruck in dem oder den zuvor aufgeweiteten Hubkissen (32) auf den Fluiddruckwert im zuletzt aufgewerteten Hubkissen (32) absenkt oder durch Leckagen absinken lässt.

4. Verfahren nach einem der Ansprüche 1 bis 3, **dadurch gekennzeichnet, dass** die Hubkissen (32) in der Reihenfolge von oben nach unten zur Anwendung kommen, so dass das dem Hubboden (33) benachbarte oberste Hubkissen (32) als erstes Hubkissen (32), das diesem nach unten hin folgende Hubkissen (32) als zweites Hubkissen usw. zur Anwendung kommt.

**Claims**

1. Method of operating a goods display unit (11) which has a lifting unit (16) with a lifting base (33) for the stacking of goods in stacking layers one above the other, and a lifting pad assembly supporting the lifting base (33) and with one or more lifting pads (32) mounted one above the other and able to be filled separately with a pressure fluid, in particular compressed air, and expandable by means of pressure fluid supply up to a height of use limited by a lift limiting device (35), and which in the case of several lifting pads (32) may be brought into use consecutively, wherein each lifting pad (32) is assigned a separate control valve (42) for controlling the pressure fluid supply to the relevant lifting pad (32), and a separate pressure sensor (47) which measures the fluidic pressure in the lifting pad (32) concerned, and a control unit (46) connected to the pressure sensor or sensors (47) is provided for switching the control valves (42), **characterised in that**, in an automatic program sequence after stacking of the goods (23) and activation of the lifting unit (16), pressure fluid is supplied to the lifting pad (32) or to one of the lifting pads (32) until the fluidic pressure has risen to a reference pressure value $p_{Ref}$ corresponding substantially to the total weight of the goods (23), and with the reference pressure value remaining constant the lifting pad (32) begins to expand, after which the pressure fluid supply is interrupted, that the reference pressure value is converted by the control unit (46) for each lifting pad (32) into a switching pressure value $p_{schalt}$ assigned to the respective pressure sensor (47) according to the formula

$$P_{schalt}^{(n)} = \frac{N - n + 1}{N + 1} \bullet P_{Ref}$$

in which N is the total number of lifting pads (32), and n the number assigned to the relevant lifting pad (32) in the sequence of use of the lifting pads (32), that, if the fluidic pressure in the one lifting pad (32) or the first of several lifting pads (32) falls below the switching pressure value assigned to the lifting pad (32) due to the removal of goods (23), the pressure fluid supply to the lifting pad (32) is opened, so that the lifting pad (32) expands to its height of use, after which the increase of the fluidic pressure in the lifting pad (32) is used as a switching signal to interrupt the pressure fluid supply to the one lifting pad (32) or the first of several lifting pads (32), and that in the case of several lifting pads (32) simultaneously or time-delayed relative to the interruption of the pressure fluid supply to a lifting pad (32) expanded to its height of use, the pressure fluid supply to the next respective lifting pad (32) is opened, wherein the pressure fluid supply to the next lifting pad (32) is interrupted on reaching at least its switching pressure value and subsequently, if the fluidic pressure falls below the switching pressure value due to the removal of goods (23), is reopened to expand the lifting pad (32) to its height of use.

2. Method according to claim 1 **characterised in that**, to compensate for leakages which cause a drop in the fluidic pressure in the lifting pad (32) concerned to below its switching pressure value, the pressure fluid supply is opened in a cycle-like sequence, if the fluidic pressure reaches a lower threshold pressure value below the switching pressure value, and is interrupted if the fluidic pressure has risen to an upper threshold pressure value in the range of the switching pressure value.

3. Method according to claim 1 or 2 **characterised in that**, after the expansion of a lifting pad (32) to its height of use, the fluidic pressure in the lifting pad (32) or the previously expanded lifting pad (32) is reduced to the fluidic pressure value in the last expanded lifting pad (32) or is allowed to drop through leakage.

4. Method according to any of claims 1 to 3, **characterised in that** the lifting pads (32) come into use in sequence from top to bottom, so that the uppermost lifting pad (32) adjacent to the lifting base (33) comes into use as the first lifting pad (32), the next lifting pad (32) below this comes into use as the second lifting pad, etc.

## Revendications

1. Procédé destiné au fonctionnement d'un dispositif de présentation de marchandises (11) qui présente un dispositif de levage (16) avec un fond élévateur (33) pour déposer des marchandises dans des couches empilées disposées les unes au-dessus des autres et un ensemble de coussins de levage portant le fond élévateur (33) avec un ou plusieurs coussins de levage (32) disposés les uns au-dessus des autres, pouvant être remplis séparément d'un fluide sous pression, en particulier d'air comprimé et pouvant se gonfler par l'amenée du fluide sous pression jusqu'à une hauteur d'usage limitée par un dispositif de limitation de levage (35), lesquels sont mis en utilisation en cas de plusieurs coussins de levage (32) les uns après les autres, à chaque coussin de levage (32) étant associés une soupape de commande (42) séparée, maîtrisant l'amenée de fluide sous pression à chaque coussin de levage (32) et un capteur de pression séparé, mesurant la pression du fluide dans le coussin de levage (32) concerné, et une unité de commande (46) reliée à l'au moins un capteur de pression (47) et commutant les soupapes de commande étant prévue, **caractérisé en ce que** dans un déroulement de programme automatique après le dépôt des marchandises (23) et l'activation du dispositif de levage (16), du fluide sous pression est amené au ou à l'un des coussins de levage (32) jusqu'à ce que le fluide sous pression soit monté à une valeur de pression de référence $p_{Ref}$ correspondant essentiellement au poids total des marchandises (23) et que le coussin de levage (32) commence à se gonfler en cas de valeur de pression de référence restant essentiellement constante, après quoi l'amenée de fluide sous pression est interrompue, **en ce que** la valeur de pression de référence est convertie par l'unité de commande (46) pour chaque coussin de levage (32) en une valeur de pression de commutation $p_{commut}$ associée au capteur de pression respectif (47) selon la formule suivante

$$p_{commut}(n) = \frac{N - n + 1}{N + 1} \bullet p_{Ref}$$

dans laquelle N est le nombre global de coussins de levage (32) et n le nombre revenant au coussin de levage respectif (32) dans l'ordre des utilisations des coussins de levage (32), **en ce que** si la pression du fluide reste inférieure dans l'un ou le premier des plusieurs coussins de levage (32), à la valeur de pression de commutation associée au coussin de levage (32) par retrait de marchandises (23), l'amenée de fluide sous pression au coussin de levage (32) est libérée de sorte que le coussin de levage (32) se gonfle jusqu'à sa hauteur d'usage, après quoi l'augmentation de pression de fluide se produisant dans le coussin de levage (32) est utilisée comme signal de commutation pour l'interruption de l'amenée de fluide sous pression à l'un ou au premier des plusieurs coussins de levage (32), et **en ce qu'**en cas de plusieurs coussins de levage (32), l'amenée de fluide sous pression au prochain coussin de levage (32) respectif est libérée en même temps ou à retardement en référence à l'interruption de l'amenée de fluide sous pression à un coussin de levage (32) gonglé jusqu'à sa hauteur d'usage, l'amenée de fluide sous pression au coussin de levage suivant (32) étant interrompue après l'atteinte au moins de sa valeur de pression de commutation et de nouveau libérée pour le gonflage du coussin de levage (32) à sa hauteur d'usage plus tard, lorsque la pression de fluide reste inférieure à la valeur de pression de commutation par retrait de marchandises (23).

2. Procédé selon la revendication 1, **caractérisé en ce que** pour la compensation de fuites qui provoquent une diminution de la pression du fluide dans le coussin de levage respectif (32) sous sa valeur de pression de commutation, l'amenée de fluide sous pression est libérée dans un déroulement cyclique lorsque la pression du fluide atteint une valeur de pression limite inférieure en dessous de la valeur de pression de commutation et est interrompue lorsque la pression du fluide est montée jusqu'à une valeur de pression limite supérieure dans la plage de la valeur de pression de commutation.

3. Procédé selon la revendication 1 ou 2, **caractérisé en ce qu'**on diminue après le gonflage d'un coussin de levage (32) à sa hauteur d'usage, la pression du fluide dans le ou les coussins de levage (32) gonflés précédemment à la valeur de pression de fluide dans le coussin de levage (32) gonflé en dernier ou on la fait diminuer par des fuites.

4. Procédé selon l'une quelconque des revendications 1 à 3, **caractérisé en ce que** les coussins de levage (32) sont utilisés dans l'ordre du haut vers le bas de sorte que le coussin de levage (32) le plus haut contigu au fond élévateur (33) soit utilisé comme premier coussin de levage (32), le coussin de levage (32) le suivant vers le bas comme deuxième coussin de levage, etc.

*Fig. 1*

Fig. 2

Fig. 3

*Fig. 4*

Fig. 5

Fig. 7

Fig. 6

EP 2 065 333 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007011680 U1
- DE 102004048428 A1
- EP 1285867 A2
- DE 19948940 A1